(19) Europäisches Patentamt
European Patent Office
Office européen des brevets

(11) EP 4 775 549 A1

(12) **EUROPEAN PATENT APPLICATION**

(43) Date of publication:
15.07.2026 Bulletin 2026/29

(21) Application number: 25185050.9

(22) Date of filing: 24.06.2025

(51) International Patent Classification (IPC):
C03B 5/04 (2006.01)          C03B 5/225 (2006.01)
C03B 7/02 (2006.01)          C03B 18/02 (2006.01)

(52) Cooperative Patent Classification (CPC):
C03B 5/2252; C03B 5/04; C03B 7/02; C03B 18/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(71) Applicant: Benxi YuJing Glass Co., Ltd.
Benxi City Liaoning Province (CN)

(72) Inventors:
• WEI, Lifang
Benxi City (CN)
• ZHAO, Xiaoliang
Benxi City (CN)

(74) Representative: Monteiro Alves, Inês
Alameda Dos Oceanos, Nº 41K-21
Parque das Nações
1990-207 Lisboa (PT)

(54) **GLASS PRODUCTION SYSTEM HAVING ONE MELTING FURNACE AND TWO PRODUCTION LINES**

(57) The present invention relates to the technical field of float glass processes; the glass production system comprises a melting furnace, a first production line and a second production line; a molten glass cooling tank is formed in an outlet end of the melting furnace, and a clarification device and a bubble-removing mechanism are arranged on the molten glass cooling tank; the first production line and the second production line are arranged on two sides of the central axis of the melting furnace at intervals; the system further comprises a diversion channel 4 and a drainage groove 41; two ends of the diversion channel are respectively connected to the first production line and the second production line, and the drainage groove is arranged between the molten glass cooling tank and the diversion channel. The drainage groove is capable of changing the proportion of the diversion channel; the molten glass flows to the first production line via a shorter diversion channel and flows to the second production line via a longer diversion channel; the air in the molten glass in the molten glass cooling tank is eliminated by means of the clarification device and the bubble removing mechanism. The bubble removing device may comprise a bin 13 in communication with a pressure device 14. The bubble removing device may comprise a plurality of barrels 7, which may be each connected to a negative pressure assembly. Each barrel 7 is sequentially connected to molten glass inlet and to molten glass outlet.

FIG.2

**Description**

**TECHNICAL FIELD**

This invention generally relates to the technical field of float glass processes, and more particularly, to a glass production system having one melting furnace and two production lines.

**BACKGROUND**

Presently, the techniques of the flat glass float production have basically matured, and its process standards have remained stable. There are specific requirements for the temperature of the molten glass in each step. The conventional flat glass float process adopts a single melting furnace forming line. The basic process comprises the steps of raw material mixing, melting in the melting portion of a melting furnace, cooling in the cooling portion of the melting furnace, tin bath forming, tempering in an tempering furnace, and cold end cutting and slicing. The conventional one-furnace-one-line float glass melting furnace is severely limited in actual production. Especially, a large-tonnage melting furnace fails to produce thin glass.

The calculation formula for the daily drawing capacity of the melting furnace is: daily drawing capacity=drawing speed*average sheet width*average thickness* 24*2.5. In this formula, the daily drawing capacity is the total weight of the molten glass drawn per day and night (ton), the drawing speed is the length of the raw glass sheets drawn per unit of time (meter/hour), the average sheet width is the average width of the raw glass sheets during production (meter), the average thickness is the average thickness of the raw glass sheets in production (meter), 24 is the hours per day and night (hour), and 2.5 is the density of the molten glass ($t/m^3$).

From the above formula, it can be seen that, when the daily drawing capacity of the one-furnace-one-line float glass melting furnace is large, the cooling area is constant, and the average thickness of the raw glass sheets increases, resulting in the failure of the large-tonnage melting furnace in producing thin glass. Thus, the versatility of glass products is poor, and the operating efficiency of the manufacturer is low.

Moreover, in the one-furnace-one-line production process, the air mixed in the molten glass during the melting needs to be removed before the forming step. The conventional method for removing bubbles is to increase the temperature of the molten glass or add a clarifying agent. The conventional one-furnace-one-line process leads to huge heat loss during the flow of the molten glass due to the low drawing capacity in the production of thin glass, making the compete removal of bubbles more difficult. Meanwhile, the addition of the clarifying agent also fails to effectively remove bubbles.

Therefore, it is urgent for those skilled in the art to develop a novel glass production line.

**SUMMARY**

The purpose of the present invention is to provide a glass production system having one melting furnace and two production lines, which has a reasonable structure, achieves ideal effect of bubble removal and is capable of effectively enhancing the quality of glass products.

To achieve the above purpose, the present invention adopts the following technical solution: a glass production system having one melting furnace and two production lines comprises a melting furnace, a first production line and a second production line, wherein a molten glass cooling tank is formed in an outlet end of the melting furnace, and a clarification device and a bubble-removing mechanism are arranged on the molten glass cooling tank; the first production line and the second production line are arranged on two sides of the central axis of the melting furnace at intervals; the glass production system having one melting furnace and two production lines further comprises a diversion channel and a drainage groove, wherein two ends of the diversion channel are respectively connected to the first production line and the second production line, and the drainage groove is arranged between the molten glass cooling tank and the diversion channel; the drainage groove is capable of moving transversely and is respectively communicated with the molten glass cooling tank and the diversion channel.

In another preferred embodiment of the present invention, the clarification device comprises a bubble removing bin and a constant pressure device, wherein a lower end of the bubble removing bin is provided with an opening, and the lower end of the bubble removing bin is immersed in the molten glass cooling tank. The lower end of the bubble removing bin and a bottom plate of the molten glass cooling tank are arranged at intervals to form a liquid flow channel. An inner cavity of the bubble removing bin is communicated with an inner cavity of the molten glass cooling tank through the liquid flow channel. The constant pressure device is communicated with the inner cavity of the bubble removing bin through a pipeline.

In another preferred embodiment of the present invention, a partition plate is arranged in the bubble removing bin, and the partition plate divides the inner cavity of the bubble removing bin into a negative pressure cavity and a pressurizing cavity. The constant pressure device is communicated with the negative pressure cavity and the pressurizing cavity through pipelines. The molten glass cooling tank on the front side of the bubble removing bin forms a liquid inlet tank, and the molten glass cooling tank on the rear side of the bubble removing bin forms a liquid outlet tank. The liquid inlet tank, the negative pressure cavity, the pressurizing cavity and the liquid outlet tank are sequentially communicated through the liquid flow channel. The melting furnace is communicated with the liquid inlet tank, and the liquid outlet tank is communicated with the drainage groove.

In another preferred embodiment of the present invention, the diversion channel comprises a first guiding channel and a second guiding channel. The diversion channel between the drainage groove and the first production line forms the first guiding channel, and the length of the first guiding channel is defined as L1. The diversion channel between the drainage groove and the second production line forms the second guiding channel, and the length of the second guiding groove is defined as L2, wherein L1<L2.

In another preferred embodiment of the present invention, the drawing capacity of the first production line is G1, the drawing capacity of the second production line is G2, and L1: L2=G1: G2.

In another preferred embodiment of the present invention, the first production line comprises a first tin bath, a first tempering furnace, and a first cold cutting line that are sequentially arranged, and the first guiding channel is connected to the first tin bath. The second production line comprises a second tin bath, a second tempering furnace, and a second cold cutting line that are sequentially arranged, and the second guiding channel is connected to the second tin bath. The distance between the first production line and the second production line is defined as H, wherein H≥15m.

In another preferred embodiment of the present invention, the melting furnace is provided with a plurality of heating furnaces, which are sequentially arranged along the central axis of the melting furnace. The daily melting capacity of the melting furnace is defined as R, and R≥ G1+G2.

In another preferred embodiment of the present invention, the bubble removing mechanism comprises a packaging disc and a sealing panel. The packaging disc is provided with an inlet port, and the inlet port is communicated with the liquid outlet tank. The sealing panel is provided with an outlet port and a negative pressure assembly. The outlet port is communicated with the drainage groove. A plurality of receiving barrels are arranged between the packaging disc and the sealing panel, and the receiving barrel is provided with an inlet port, a discharging port and a pressure relief port. A first end of the receiving barrel is connected to the packaging disc in a paired manner, and a second end of the receiving barrel is connected to the sealing panel in an interacting manner. The plurality of receiving barrels are capable of revolving around the central axis of the packaging disc and the sealing panel, thereby sequentially allowing the feeding ports in the plurality of receiving barrels to be communicated with the inlet port in a paired manner, allowing the discharging ports to be communicated with the outlet port in a paired manner, and allowing the pressure relief ports to be communicated with the negative pressure assembly in a paired manner.

In another preferred embodiment of the present invention, the present invention further comprises a fixing ring and a rotating disc, wherein the rotating disc is rotatably arranged in the fixing ring, and the plurality of receiving barrels are respectively connected to the rotating disc in an interacting manner. In this way, the plurality of receiving barrels and the rotating disc integrally revolve around the central axis of the packaging disc and the sealing panel.

In another preferred embodiment of the present invention, a first end plate is arranged at the first end of the receiving barrel, the first end plate is attached to an inner side wall of the packaging disk, and the charging port is formed in the first end plate. The inlet port is arranged at an upper portion of the packaging disc, and when the receiving barrel revolves around the central axis of the packaging disc and the sealing panel to a zero o'clock position, the feeding port is paired with the inlet port.

In another preferred embodiment of the present invention, a second end plate is arranged on the second end of the receiving barrel, the second end plate is attached to the inner side wall of the sealing panel, and the discharging port is formed in the second end plate. The outlet port is provided at a lower portion of the sealing panel, and when the receiving barrel revolves to a six o'clock position around the central axis of the packaging disc and the sealing panel, the discharging port is paired with the outlet port.

In another preferred embodiment of the present invention, the second end of the receiving barrel is rotatably connected to the rotating disc. The present invention further comprises a driving shaft, and the driving shaft is provided with a driving gear. The receiving barrel is provided with a driven gear ring. The driving gear is respectively or synchronously engaged with the driven gear rings on the plurality of receiving barrels, and the driving shaft is connected to an external motor to respectively or synchronously propel the plurality of receiving barrels to rotate on the rotating disc.

In another preferred embodiment of the present invention, the negative pressure assembly comprises a pressure relief valve and a vacuumizing device. The pressure relief valve is arranged on the sealing panel, and the pressure relief valve is connected to the vacuumizing device through a pipeline. The pressure relief port is arranged in the second end plate of the receiving barrel. When the receiving barrel revolves to a three o'clock position and a nine o'clock position around the central axis of the packaging disc and the rotating disc, the pressure relief port is communicated with the pressure relief valve in a paired manner.

In another preferred embodiment of the present invention, a cross-shaped ratchet and a dial disc are arranged on the sealing panel, a cross-shaped sliding groove is formed in the cross-shaped ratchet, and a swing shaft is arranged on the dial disc. The cross-shaped ratchet is connected to the rotating disc through a connecting shaft, the dial disc is rotatably connected to the sealing panel through the rotating shaft, and the swing shaft slidably penetrates through the plurality of cross-shaped sliding grooves, so that the dial disc is in transmission connection with the cross-shaped ratchet.

Compared with the prior art, the present invention has the following advantages: the structure is reasonable, and the drainage groove is capable of changing the proportion of the diversion channel; the molten glass flows to the first production line via a shorter diversion channel and flows to the second production line via a longer diversion channel. The air in the molten glass in the molten glass cooling tank is eliminated by means of the clarification device and the bubble removing mechanism; through adopting the present invention, the quality of glass products is improved and the waste of the melting capacity is avoided.

**BRIEF DESCRIPTION OF THE DRAWINGS**

Figure 1 is a schematic diagram illustrating an overall layout of the present invention;
Figure 2 is a schematic diagram illustrating the melting furnace, clarification device, bubble removing mechanism and diversion channel of the present invention;
Figure 3 is a schematic diagram illustrating an overall structure of the bubble removing mechanism of the present invention;
Figure 4 is a schematic diagram illustrating a sectional view of the bubble removing mechanism of the present invention;
Figure 5 is a schematic diagram illustrating an internal structure of the bubble removing mechanism of the present invention; and
Figure 6 is a schematic diagram illustrating the assembled structure of the receiving barrel, sealing panel and rotating disc of the present invention;

In Figures:
1-Melting Furnace, 2-The First Production Line, 3-The Second Production Line, 4-Diversion Channel, 5-Packaging Disc, 6-Sealing Panel, 7-Receiving Barrel, 11-Molten Glass Cooling Tank, 12-Heating Furnace, 13-Bubble Removing Bin, 14-Constant Pressure Device, 15-Liquid Flow Channel, 16-Partition Plate, 111-Liquid Inlet Tank, 112-Liquid Outlet Tank, 131-Negative Pressure Cavity, 132-Pressurizing Cavity, 21-The First Guiding Channel, 22-The Second Guiding Channel, 23-The First tempering Furnace, 24-The First Cold Cutting Line, 31-The Second Guiding Channel, 32-The Second Tin Bath, 33-The Second tempering Furnace, 34-The Second Cold Cutting Line, 41-Drainage Groove, 51-Inlet Port, 52-Driving Shaft, 53-Driving Gear, 61-Outlet Port, 62-Fixing Ring, 63-Rotating Disc, 64-Pressure Relief Valve, 65-Cross-shaped ratchet, 66-Dial Disc, 67-Cross-shaped Sliding Groove, 68-Swing Shaft, 71-Feeding Port, 72-Discharging Port, 73-Pressure Relief Port, 74-The First End Plate, 75-The Second End Plate, 76-Driven Gear Ring.

**DETAILED DESCRIPTION**

Drawings and embodiments are combined hereinafter to further elaborate the technical solution of the present invention.

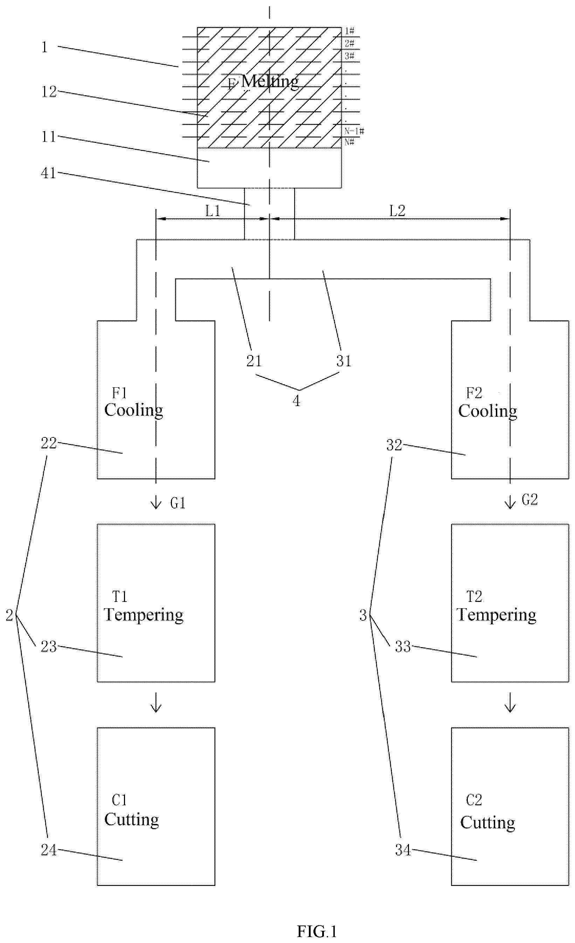

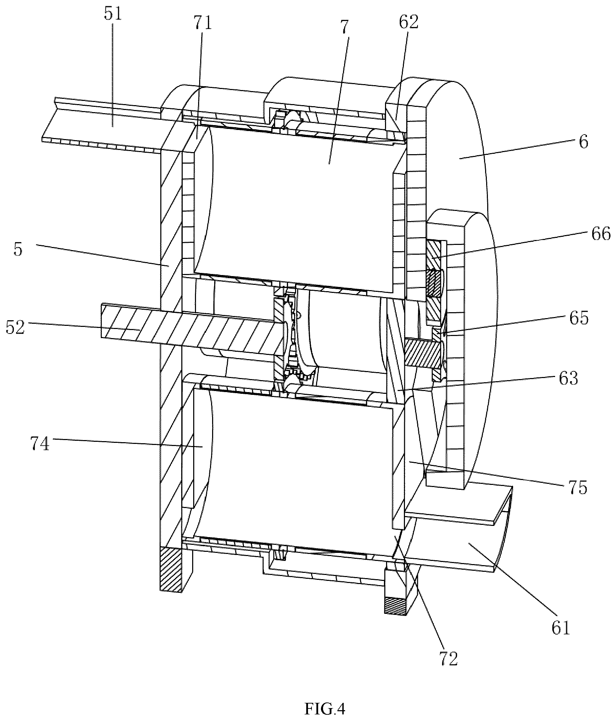

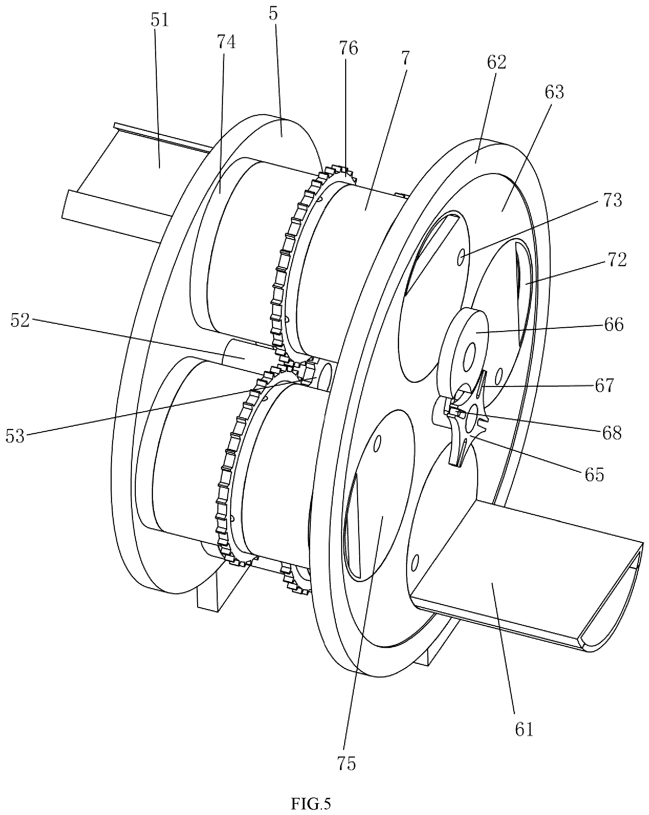

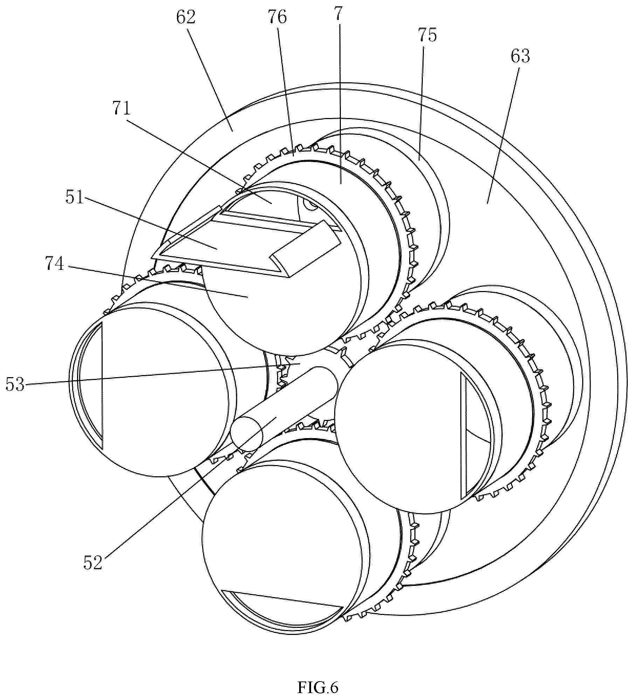

Referring to Figures 1-6, the glass production system having one melting furnace and two production lines of the present invention comprises a melting furnace 1, a first production line 2 and a second production line 3, wherein a molten glass cooling tank 11 is formed in an outlet end of the melting furnace 1, and a clarification device and a bubble-removing mechanism are arranged on the molten glass cooling tank 11. The first production line 2 and the second production line 3 are arranged on two sides of the central axis of the melting furnace 1 at intervals. The glass production system having one melting furnace and two production lines further comprises a diversion channel 4 and a drainage groove 41, wherein two ends of the diversion channel 4 are respectively connected to the first production line 2 and the second production line 3, and the drainage groove 41 is arranged between the molten glass cooling tank 11 and the diversion channel 4. The drainage groove 41 is capable of moving transversely and is respectively communicated with the molten glass cooling tank 11 and the diversion channel 4. The melting capacity of the melting furnace 1 is a calibration value, and the cooling area of the first production line 2 and the cooling area of the second production line 3 are constant values (which are normally 1.8*2.4M or 2.4*3.6M and depend on the width of the glass sheets). The difference is that the first production line 2 and the second production line 3 are used to produce glass with different thicknesses.

The melting furnace 1, the molten glass cooling tank 11, the drainage groove 41 and the diversion channel 4 are sequentially communicated and are respectively connected to the first production line 2 and the second production line 3. The two production lines are capable of producing glass with different thicknesses. There is air in the molten glass in the melting furnace 1, and after the molten glass enters the molten glass cooling tank 11, most of the air is exhausted by means of the clarification device and the bubble removing mechanism. The rest of the air is naturally removed when it flows in the diversion channel 4, which significantly improves the forming quality of the glass, especially the thin glass.

The clarification device comprises a bubble removing bin 13 and a constant pressure device 14, wherein a lower end of the bubble removing bin 13 is provided with an opening, and the lower end of the bubble removing bin 13 is immersed in the molten glass cooling tank 11. The lower end of the bubble removing bin 13 and a bottom plate of the molten glass cooling tank 11 are arranged at intervals to form a liquid flow channel 15. An inner cavity of the bubble removing bin 13 is communicated with an inner cavity of the molten glass cooling tank 11 through the liquid flow channel 15. The constant pressure device 14 is communicated with the inner cavity of the bubble removing bin 13 through a pipeline. When the temperature in the melting furnace 1 reaches 1450°C (degrees Celsius), the molten glass is formed, and the molten glass flows from one end of the molten glass cooling tank 11 to the other end of the molten glass cooling tank 11 through the liquid flow channel 15. The molten glass flows through the bubble removing bin 13 during the process. The constant pressure device 14 is capable of changing the air pressure in the bubble removing bin 13, thereby enabling the bubbles to be separated from the molten glass such that the air contained in the molten glass is reduced and the quality of the glass products is enhanced.

Further, a partition plate 16 is arranged in the bubble removing bin 13, and the partition plate 16 divides the inner cavity of the bubble removing bin 13 into a negative pressure cavity 131 and a pressurizing cavity 132. The constant pressure device 14 is communicated with the negative pressure cavity 131 and the pressurizing cavity 132 through pipelines. The molten glass cooling tank 11 on the front side of the bubble removing bin 13 forms a liquid inlet tank 111, and the molten glass cooling tank 11 on the rear side of the bubble removing bin 13 forms a liquid outlet tank 112. The liquid inlet tank 111, the negative pressure cavity 131, the pressurizing cavity 132 and the liquid outlet tank 112 are sequentially communicated through the liquid flow channel 15. The melting furnace 1 is communicated with the liquid inlet tank 111, and the liquid outlet tank 112 is communicated with the drainage groove 41. The bubble removing bin 13 is internally provided with the negative pressure cavity 131 and the pressurizing cavity 132, and the constant pressure device 14 comprises a pressurizing air pump or a vacuumizing air pump. The constant pressure device 14 is capable of reducing the pressure in the negative pressure cavity 131 and increasing the pressure in the pressurizing cavity 132. When the molten glass passes through the liquid flow channel 15, the molten glass is sucked into the negative pressure cavity 131, and the bubbles are separated from the molten glass. Subsequently, the molten glass passes through the pressurizing cavity 132, and the density of the molten glass is increased along the increase of pressure. Under the action of the increased pressure and gravity, the bubbles are further separated from the molten glass.

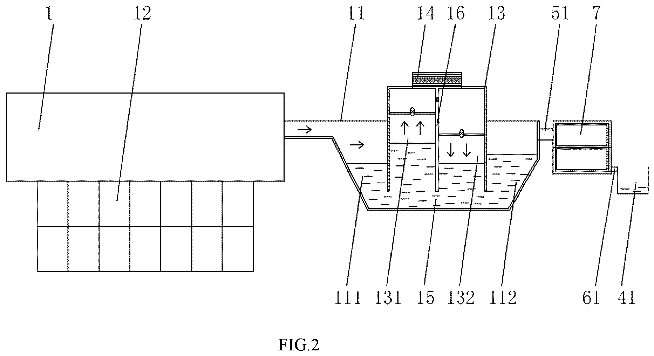

It can be understood that, referring to Figure 2, the lower end of the bubble removing bin 13 is immersed below the liquid level of the molten glass in the molten glass cooling tank 11, so that the inner cavity of the bubble removing bin 13 is kept sealed. More specifically, the liquid level of the molten glass in the molten glass cooling tank 11 is higher than the lower end of the bubble removing bin 13 and the drainage groove 41, the liquid level in the molten glass cooling tank 11 is higher than the negative pressure cavity 131, and the liquid level in the negative pressure cavity 131 is higher than the pressurizing cavity 132.

The diversion channel 4 comprises a first guiding channel 21 and a second guiding channel 31. The diversion channel 4 between the drainage groove 41 and the first production line 2 forms the first guiding channel 21, and the length of the first guiding channel 21 is defined as L1. The diversion channel 4 between the drainage groove 41 and the second production line 3 forms the second guiding channel 31, and the length of the second guiding groove 31 is defined as L2, wherein L1<L2.

For example, the first production line 1 is used to produce thin glass. The drawing capacity G1 of the first production line 1 is a calibration value, the cooling area of the first production line 1 is fixed, and the drawing speed is also a calibration value. The length of the diversion channel 4 from the melting furnace 1 to the first production line 1 is insufficient, so that a cooling device or heating device needs to be added for temperature adjustment such that the temperature requirement of the molten glass entering the first production line 1 is met. The failure of meeting the temperature requirement leads to affected duration and production efficiency of the subsequent cooling and forming processes. In actual production, the production capacity of the melting furnace 1 is excessive. Namely, the daily melting capacity of the melting furnace 1 is much higher than the daily drawing capacity G1 of the first production line 1, resulting in huge waste and limited production efficiency.

On this basis, it is assumed that the second production line 3 completely consumes the excessive capacity of the melting furnace 1, and the daily melting capacity of the melting furnace 1 subtracts the daily drawing capacity G1 of the first production line 2 is equal to the daily drawing capacity G2 of the second production line 3. Because the first production line 2 and the second production line 3 are symmetrically arranged on two sides of the melting furnace 1, and the the lengths of the diversion channel 4 corresponding to the two production lines are equal. If the thicknesses of glass produced by the first production line 2 and the second production line 3 are consistent, the length of the diversion channel 4 is capable of ensuring a normal temperature decrease of the molten glass (decreasing from 1450°C to 1150°C). However, the glass manufacturers need to produce various raw glass sheets to meet the market demands. Under such circumstances, the first production line 2 is used as a main production line for producing highly-demanded glass products, and the second production line 3 is used as an assistant production line for producing other glass products. Therefore, the daily drawing capacity G2 of the second production line 3 is variable, and G2 is necessarily not equal to G1. The first production lines 2 and the second production lines 3 arranged symmetrically use the diversion channel 4 with the same length results in insufficient length of the diversion channel 4 from the melting furnace 1 to the second production line 3. Thus, an additional cooling device or a heating device for temperature adjustment is required for allowing the temperature requirement when the molten glass enters the second production line 3 is met.

In the present invention, the glass production system of the present invention adopts a one-furnace-two-lines arrangement, wherein the first production line 2 and the second production line 3 are asymmetrically arranged on two sides of the central axis of the melting furnace 1, and the drainage groove 41 enables the relative connection point between the molten glass cooling tank 11 and the diversion channel 4 to be adjusted. Therefore, the flowing path of the molten glass between drainage groove 41 and the first production line 2, as well as the flowing path of the molten glass between the drainage groove 41 and the second production line 3 are proportionally adjusted. In this way, under different drawing capacities, the temperature of the molten glass flowing into the two production lines is relatively constant, allowing the two production lines to simultaneously produce glass with different thicknesses. Thus, the production capacity of a large-tonnage melting furnace 1 is fully utilized, avoiding waste while enhancing the competitiveness of the manufacturer.

The drawing capacity of the first production line 2 is G1, the drawing capacity of the second production line 3 is G2, and L1: L2=G1: G2. The temperature of the molten glass flowing into the molten glass cooling tank 1 from the melting furnace 1 is 1450°C. The molten glass flows to the first production line 2 and the second production line 3 through the diversion channel 4. The length of the diversion channel 4 between the melting furnace 1 and the first production line 2 is associated with the distance L1, and the length of the diversion channel 4 between the melting furnace 1 and the second production line 3 is associated with the distance L2.

The daily melting capacity of the melting furnace 1 is defined as R, and R ≥ G1+G2. Namely, when the daily melting capacity of the large-tonnage melting furnace 1 is equal to the sum of the drawing capacity G1 of the first production line 2 and the drawing capacity G2 of the second production line 3, the waste of the production capacity of the melting furnace 1 is avoided. The drawing speed of the glass production line is normally a fixed value, which is associated with the efficiency of the production line in subsequent processes.

Calculation formula based on the daily drawing capacity:

$$\text{Daily drawing capacity} = \text{drawing speed* average sheet width*average thickness*24*2.5.}$$

The first production line 2 is used for producing thin glass, and the smaller average thickness is in proportion to the daily drawing capacity G1. With a constant drawing speed, a smaller drawing capacity G1 means that the heat loss of the molten glass during the flowing process is relatively large. By reducing the distance L1, the diversion channel 4 between the melting furnace 1 and the first production line 2 is shortened. The heat loss of the molten glass in the first guiding channel 21 is reduced, thereby ensuring that the temperature of the molten glass entering the first production line 2 is kept around 1150°C.

Similarly, the second production line 3 is used for producing thick glass, and the larger average thickness is in proportion to the daily drawing capacity G2. Under the premise of a constant drawing speed, a larger drawing capacity G2 means that the heat loss of the molten glass during the flowing process is relatively small. A larger distance L2 is set to make the second guiding channel 31 between the melting furnace 1 and the second production line 3 longer, thereby ensuring that the temperature of the molten glass entering the first production line 2 is kept around 1150°C.

By changing the ratio between the first guiding channel 21 and the second guiding channel 31 through the drainage groove 41, the daily drawing capacity of the first production line 2 and the second production line 3 are proportional. The molten glass in the melting furnace 1 flows out from the drainage groove 41 and respectively enters the first production line 2 and the second production line 3 through the first guiding channel 21 and the second guiding channel 31. The lengths of the flowing path of the molten glass are different, thereby enabling the first production line 2 and the second production line 3 to produce glass products with different thicknesses. Moreover, L1: L2=G1: G2, so that the sum of the drawing capacity G1 of the first production line 2 and the drawing capacity G2 of the second production line 3 is equal to the melting capacity of the large-tonnage melting furnace 1, thus avoiding waste of the melting capacity of the melting furnace 1 while making the manufacturer more competitive.

It can be understood that the daily drawing capacities of the first production line 2 and the second production line 3 may be adjusted for producing glass with different thicknesses. When adjusting the daily drawing capacities G1 and G2, the drawing speeds of the first production line 2 and the second production line 3 need to be adjusted proportionally. On the basis of L1: L2=G1: G2, the lengths of the first guiding channel 21 and the second guiding channel 31 need to be adjusted accordingly to avoid excessive heat loss of the molten glass in the diversion channel 4 caused by the variation of drawing speed. In conventional glass production lines, additional heating devices are installed in the diversion channel 4 for compensate for the temperature loss during the production process.

The first production line 2 comprises a first tin bath 22, a first tempering furnace 23, and a first cold cutting line 24 that are sequentially arranged, and the first guiding channel 21 is connected to the first tin bath 22. The second production line 3 comprises a second tin bath 32, a second tempering furnace 33, and a second cold cutting line 34 that are sequentially arranged, and the second guiding channel 31 is connected to the second tin bath 32.

The first production line 2 comprises a first tin bath 22, a first tempering furnace 23, and a first cold cutting line 24 that are sequentially arranged, and the first guiding channel 21 is connected to the first tin bath 22. The second production line 3 comprises a second tin bath 32, a second tempering furnace 33, and a second cold cutting line 34 that are sequentially arranged, and the second guiding channel 31 is connected to the second tin bath 32. The distance between the first production line 2 and the second production line 3 is defined as H, and H≥15m (meters). The distance H ensures that there is a reasonable maintenance space between the two production lines. Meanwhile, L1+ L2≥15m, and the diversion channel 4 may be reasonably arranged to connect the melting furnace 1, the first production line 2 and the second production line 3. The molten glass cooling tank 11 is transversely arranged at the outlet end of the melting furnace 1. The molten glass in the melting furnace 1 enters the molten glass cooling tank 11 first such that the temperature of the molten glass is reduced to 1450°C or below. Certainly, the temperature of the molten glass is further reduced after passing through the diversion channel 4. The position of the drainage groove 41 may be transversely adjusted along the molten glass cooling tank 11, and the length L1 of the first guiding channel 21 and the length L2 of the second guiding channel 31 are simultaneously changed, thereby meeting the requirement of L1:L2=G1:G2.

The melting furnace 1 is provided with a plurality of heating furnaces 12, which are sequentially arranged along the central axis of the melting furnace 1. The daily melting capacity of the melting furnace 1 is defined as R, and R≥ G1+G2. The melting area of the melting furnace 1 is defined as Sf, the area of the first production line 2 is defined as S1, and Sf:S1=1:0.29. The daily melting capacity R of the melting furnace 1 may be adjusted in real time by adjusting the number of the heating furnaces 12 when the total daily drawing capacity L of the first production line 2 and the second production line 3 varies. Thus, the waste of the production capacity of the melting furnace 1 is effectively avoided. The present invention adopts an arrangement of one furnace and two lines. The first production line 2 and the second production line 3 are asymmetrically arranged on two sides of the central axis of the melting furnace 1, achieving the simultaneous production of glass with different thicknesses. In this way, the production capacity of the large-tonnage furnace is fully utilized, so that the waste is avoided and the competitiveness of the manufacturer is enhanced.

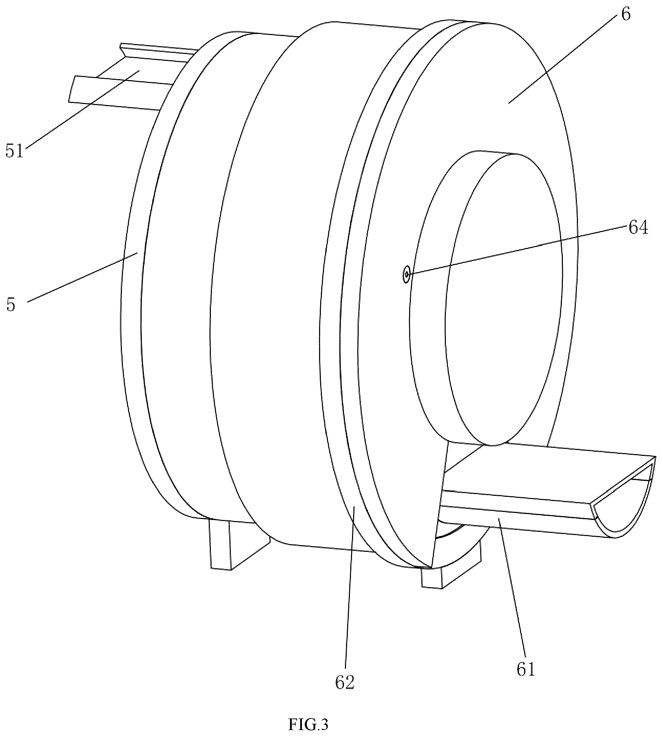

Further, referring to Figure 3-6, the bubble removing mechanism comprises a packaging disc 5 and a sealing panel 6. The packaging disc 5 is provided with an inlet port 51, and the inlet port 51 is communicated with the liquid outlet tank 112. The sealing panel 6 is provided with an outlet port 61 and a negative pressure assembly. The outlet port 61 is communicated with the drainage groove 41. A plurality of receiving barrels 7 are arranged between the packaging disc 5 and the sealing panel 6, and the receiving barrel 7 is provided with an inlet port 71, a discharging port 72 and a pressure relief port 73. A first end of the receiving barrel 7 is connected to the packaging disc 5 in a paired manner, and a second end of the receiving barrel 7 is connected to the sealing panel 6 in an interacting manner. The plurality of receiving barrels 7 are capable of revolving around the central axis of the packaging disc 5 and the sealing panel 6, thereby sequentially allowing the feeding ports 71 in the plurality of receiving barrels 7 to be communicated with the inlet port 51 in a paired manner, allowing the discharging ports 72 to be communicated with the outlet port 61 in a paired manner, and allowing the pressure relief ports 73 to be communicated with the negative pressure assembly in a paired manner.

It can be understood that the first end of the receiving barrel 7 is paired with the packaging disc 5, and the second end of the receiving barrel 7 is paired with the sealing panel 6, so that an inner cavity of the receiving barrel 7 is relatively independent and sealed. The inner cavity of the receiving barrel 7 is communicated with the outside only when the feeding port 71 in the receiving barrel 7 is paired with the inlet port 51 or the discharging port 72 in the receiving barrel 7 is paired with the outlet port 61. Moreover, the pressure relief port 73 in the receiving barrel 7 may be paired with the negative pressure assembly on the sealing panel 6.

The molten glass in the molten glass cooling tank 11 is sequentially fed into the corresponding receiving barrel 7 through the liquid outlet tank 112, the inlet port 51 and the feeding port 71. The molten glass in the receiving barrel 7 is capable of being discharged from the discharging port 72 and the outlet port 61 to the drainage groove 41. The plurality of receiving barrels 7 revolve around the central axis of the packaging disc 5 and the sealing panel 6, thereby realizing the sequential feeding and discharging. Further, the revolution of the receiving barrel 7 allows it to be paired with the pressure relief port 73. When the receiving barrel 7 is stopped, the pressure inside the receiving barrel 7 is reduced through the pressure relief port 73. Further, the negative pressure assembly is communicated with the inner cavity of the receiving barrel 7 through the pressure relief port 73, which reduces the pressure inside the packaging barrel 7 and allows the air in the molten glass to be removed such that the amount of bubbles in the molten glass is reduced and the quality of the glass is improved.

The present invention further comprises a fixing ring 62 and a rotating disc 63, wherein the rotating disc 63 is rotatably arranged in the fixing ring 62, and the plurality of receiving barrels 7 are respectively connected to the rotating disc

63 in an interacting manner. In this way, the plurality of receiving barrels 7 and the rotating disc 63 integrally revolve around the central axis of the packaging disc 5 and the sealing panel 6.

It can be understood that the structure is mounted on the ground or a support. The fixing ring 62 is fixedly arranged on the ground or a base, the rotating disc 63 is concentrically arranged in the fixing ring 62, and the plurality of receiving barrels 7 and the rotating disc 63 are assembled to form a rotating wheel structure.

The packaging disc 5 is fixedly arranged on the ground or the support, the first ends of the plurality of receiving barrels 7 interact with the packaging disc 5, and the second ends of the plurality of receiving barrels 7 are paired with the sealing panel 6. The receiving barrels 7 and the rotating disc 63 integrally revolve around the central axis of the packaging disc 5 and the sealing panel 6, so that the feeding port 71 is paired with the inlet port 51, the discharging port 72 is paired with the outlet port 61, and the pressure relief port 73 is paired with the negative pressure assembly on the sealing panel 6.

Briefly, there are a plurality of positions between the packaging disc 5 and the sealing panel 6, and the plurality of receiving barrels 7 sequentially pass through these positions during revolution, and the receiving barrels 7 undergo the feeding, bubble removing and discharging at different positions.

The zero, three, six, and nine o'clock mentioned below are the clock directions corresponding to the relative positions of the plurality receiving barrels 7 during their revolution.

A first end plate 74 is arranged at the first end of the receiving barrel 7, the first end plate 74 is attached to an inner side wall of the packaging disk 5, and the charging port 71 is formed in the first end plate 74. The inlet port 51 is arranged at an upper portion of the packaging disc 5, and when the receiving barrel 7 revolves around the central axis of the packaging disc 5 and the sealing panel 6 to the zero o'clock position, the feeding port 71 is paired with the inlet port 51. The first end plate 74 is attached to the packaging disc 5, and when the receiving barrel 7 revolves, the first end plate 74 slides along the inner side wall of the packaging disc 5. At this point, the feeding port 71 is in a sealed state to prevent the leakage of the molten glass. It can be understood that, when the receiving barrel 7 rotates to the zero o'clock position, the molten glass in the molten glass cooling tank 11 is fed into the receiving barrel 7 through the inlet port 51 and the feeding port 71.

A second end plate 75 is arranged on the second end of the receiving barrel 7, the second end plate 75 is attached to the inner side wall of the sealing panel 6, and the discharging port 72 is formed in the second end plate 75. The outlet port 61 is provided at a lower portion of the sealing panel 6, and when the receiving barrel 7 revolves to the six o'clock position around the central axis of the packaging disc 5 and the sealing panel 6, the discharging port 72 is paired with the outlet port 61. As previously mentioned, the second end plate 75 is attached to the sealing panel 6, and when the receiving barrel 7 revolves, the second end plate 75 slides along the inner side wall of the sealing panel 6. At this point, the discharge port 72 is in a sealed state to prevent the leakage of the molten glass. It can be understood that, when the receiving barrel 7 rotates to the six o'clock position, the molten glass in the receiving barrel 7 is discharged from the discharging port 72 and the outlet port 61.

The second end of the receiving barrel 7 is rotatably connected to the rotating disc 63. The present invention further comprises a driving shaft 52, and the driving shaft 52 is provided with a driving gear 53. The receiving barrel 7 is provided with a driven gear ring 76. The driving gear 53 is respectively or synchronously engaged with the driven gear rings 76 on the plurality of receiving barrels 7, and the driving shaft 52 is connected to an external motor to respectively or synchronously propel the plurality of receiving barrels 7 to rotate on the rotating disc 63. The driving shaft 52 may be an output shaft of the external motor, and the driving shaft 52 is configured to propel the receiving barrels 7 to rotate synchronously or asynchronously. When the driving shaft 52 is in transmission connection with the corresponding receiving barrel 7, the receiving barrel 7 is not at a zero o'clock position or a six o'clock position. At this point, the driving shaft 52 propels the receiving barrel 7 to rotate through the driving gear 53 and the driven gear ring 76. Thus, the molten glass in the receiving barrel 7 is in a running state, and the air is separated from the molten glass. Definitely, the receiving barrel 7 is provided with a travel controller, a counter and a position controller. Therefore, after the receiving barrel 7 stops rotating, the feeding port 71, the discharging port 72 and the pressure relief port 73 in the receiving barrel 7 are at corresponding positions after the receiving barrel revolves to switch to another position.

It can be understood that, the driving shaft 52 may be in synchronous transmission connection with the plurality of receiving barrels 7 through the driving gear 53 and the driven gear ring 76, thereby allowing the plurality of receiving barrels 7 to synchronously rotate during revolution. The negative pressure assembly comprises a pressure relief valve 64 and a vacuumizing device. The pressure relief valve 64 is arranged on the sealing panel 6, and the pressure relief valve 64 is connected to the vacuumizing device through a pipeline. The pressure relief port 73 is arranged in the second end plate 75 of the receiving barrel 7. When the receiving barrel 7 revolves to a three o'clock position and a nine o'clock position around the central axis of the packaging disc 5 and the rotating disc 63, the pressure relief port 73 is communicated with the pressure relief valve 64 in a paired manner. When the high-temperature molten glass is fed into the receiving barrel 7, the pressure of the air in the received barrel 7 is increased. At this point, the receiving barrel 7 needs to rotate to the three o'clock position and nine o'clock position first, and then the driving shaft 52 propels the receiving barrel 7 to rotate by a certain angle, thereby enabling the pressure relief port 73 to be paired with the pressure relief valve 64 such that the pressure in the receiving barrel 7 is reduced.

Further, the pressure relief valve 64 is communicated with the vacuumizing device (not shown). Because the receiving barrel 7 at this position is in a non-feeding and discharging state, the vacuumizing device reduces the pressure in the receiving barrel 7, and the air is separated from the molten glass under the action of the negative pressure, thereby reducing the amount of bubbles such that the quality of the glass is significantly improved.

In particular, after the receiving barrel 7 undergoes the negative pressure treatment by means of the vacuumizing device, the driving shaft 52 propels the receiving barrel 7 to rotate, and the molten glass runs inside the receiving barrel 7 along with the rotation of the receiving barrel 7, so that the air in the molten glass is easily removed.

A cross-shaped ratchet 65 and a dial disc 66 are arranged on the sealing panel 6, a cross-shaped sliding groove 67 is formed in the cross-shaped ratchet 65, and a swing shaft 68 is arranged on the dial disc 66. The cross-shaped ratchet 65 is connected to the rotating disc 63 through a connecting shaft, the dial disc 66 is rotatably connected to the sealing panel 6 through the rotating shaft, and the swing shaft 68 slidably penetrates through the plurality of cross-shaped sliding grooves 67, so that the dial disc 66 is in transmission connection with the cross-shaped ratchet 65. It can be understood that, the cross-shaped ratchet 65 and the dial disc 66 are conventional step-by-step transmission devices. When the dial disc 66 rotates for a circle, the swing shaft 68 slides back and forth along the cross-shaped slide groove 67 for one time, and the cross-shaped ratchet 65 is propelled to rotate by a fixed angle. **In** the present invention, four receiving barrels 7 are arranged in a cross shape, and the dial disc 66 rotates for a circle to propel the cross-shaped ratchet 65 to rotate by 90 degrees, so that the plurality of receiving barrels 7 revolve along the zero o'clock position, the three o'clock position, the six o'clock position and the nine o'clock position.

The above are merely preferred embodiments of the present invention, and therefore, equivalent changes or modifications made according to the structures, features and principles described in the scope of the present invention shall all fall within the scope defined by the claims of the present invention.

### Claims

1. A glass production system having one melting furnace and two production lines, **characterized by** the fact that it comprises:

   a melting furnace (1),
   a first production line (2), and
   a second production line (3), wherein a molten glass cooling tank (11) is formed in an outlet end of the melting furnace (1), wherein a clarification device and a bubble-removing mechanism are arranged on the molten glass cooling tank (11), wherein the first production line (2) and the second production line (3) are arranged on two sides of the central axis of the melting furnace (1) at intervals, wherein the glass production system having one melting furnace and
   two production lines further comprises:
   a diversion channel (4) and a drainage groove (41), wherein two ends of the diversion channel (4) are respectively connected to the first production line (2) and the second production line (3), wherein the drainage groove (41) is arranged between the molten glass cooling tank (11) and the diversion channel (4), and wherein the drainage groove (41) is capable of moving transversely and is respectively communicated with the molten glass cooling tank (11) and the diversion channel (4).

2. The glass production system having one melting furnace and two production lines of claim 1, wherein the clarification device comprises:
   a bubble removing bin (13) and a constant pressure device (14), wherein a lower end of the bubble removing bin (13) is provided with an opening, wherein the lower end of the bubble removing bin (13) is immersed in the molten glass cooling tank (11), wherein the lower end of the bubble removing bin (13) and a bottom plate of the molten glass cooling tank (11) are arranged at intervals to form a liquid flow channel (15), wherein an inner cavity of the bubble removing bin (13) is communicated with an inner cavity of the molten glass cooling tank (11) through the liquid flow channel (15), and wherein the constant pressure device (14) is communicated with the inner cavity of the bubble removing bin (13) through a pipeline.

3. The glass production system having one melting furnace and two production lines of claim 2, wherein a partition plate (16) is arranged in the bubble removing bin (13), wherein the partition plate (16) divides the inner cavity of the bubble removing bin (13) into a negative pressure cavity (131) and a pressurizing cavity (132), wherein the constant pressure device (14) is communicated with the negative pressure cavity (131) and the pressurizing cavity (132) through pipelines, wherein the molten glass cooling tank (11) on the front side of the bubble removing bin (13) forms a liquid inlet tank (111), wherein the molten glass cooling tank (11) on the rear side of the bubble removing bin (13) forms a liquid outlet tank (112), wherein the liquid inlet tank (111), the negative pressure cavity (131), the pressurizing cavity

(132) and the liquid outlet tank (112) are sequentially communicated through the liquid flow channel (15), and wherein the melting furnace (1) is communicated with the liquid inlet tank (111), and the liquid outlet tank (112) is communicated with the drainage groove (41).

4. The glass production system having one melting furnace and two production lines of claim 1, wherein the diversion channel (4) comprises:
a first guiding channel (21) and a second guiding channel (31), wherein the diversion channel (4) between the drainage groove (41) and the first production line (2) forms the first guiding channel (21), wherein the length of the first guiding channel (21) is defined as L1, wherein the diversion channel (4) between the drainage groove (41) and the second production line (3) forms the second guiding channel (31), wherein the length of the second guiding groove (31) is defined as L2, and wherein L1< L2.

5. The glass production system having one melting furnace and two production lines of claim 4, wherein the drawing capacity of the first production line (2) is G1, wherein the drawing capacity of the second production line (3) is G2, and wherein L1: L2=G1: G2.

6. The glass production system having one melting furnace and two production lines of claim 5, wherein the first production line (2) comprises:
a first tin bath (22), a first tempering furnace (23), and a first cold cutting line (24) that are sequentially arranged, wherein the first guiding channel (21) is connected to the first tin bath (22), wherein the second production line (3) comprises:
a second tin bath (32), a second tempering furnace (33), and a second cold cutting line (34) that are sequentially arranged, wherein the second guiding channel (31) is connected to the second tin bath (32), wherein the distance between the first production line and the second production line is defined as H, and wherein H≥15m.

7. The glass production system having one melting furnace and two production lines of claim 1, wherein the melting furnace (1) is provided with a plurality of heating furnaces (12), which are sequentially arranged along the central axis of the melting furnace (1), and wherein the daily melting capacity of the melting furnace (1) is defined as R, and R≥ G1+G2.

8. The glass production system having one melting furnace and two production lines of claim 1, wherein the bubble removing mechanism comprises:
a packaging disc (5) and a sealing panel (6), wherein the packaging disc (5) is provided with an inlet port (51), wherein the inlet port (51) is communicated with the liquid outlet tank (112), wherein the sealing panel (6) is provided with an outlet port (61) and a negative pressure assembly, wherein the outlet port (61) is communicated with the drainage groove (41), wherein a plurality of receiving barrels (7) are arranged between the packaging disc (5) and the sealing panel (6), wherein the receiving barrel (7) is provided with an inlet port (71), a discharging port (72) and a pressure relief port (73), wherein a first end of the receiving barrel (7) is connected to the packaging disc (5) in a paired manner, wherein a second end of the receiving barrel (7) is connected to the sealing panel (6) in an interacting manner, and wherein the plurality of receiving barrels (7) are capable of revolving around the central axis of the packaging disc (5) and the sealing panel (6), thereby sequentially allowing the feeding ports (71) in the plurality of receiving barrels (7) to be communicated with the inlet port (51) in a paired manner, allowing the discharging ports (72) to be communicated with the outlet port (61) in a paired manner, and allowing the pressure relief ports (73) to be communicated with the negative pressure assembly in a paired manner.

9. The glass production system having one melting furnace and two production lines of claim 8, wherein the glass production system further comprises:
a fixing ring (62) and a rotating disc (63), wherein the rotating disc (63) is rotatably arranged in the fixing ring (62), wherein the plurality of receiving barrels (7) are respectively connected to the rotating disc (63) in an interacting manner, and wherein in this way, the plurality of receiving barrels (7) and the rotating disc (63) integrally revolve around the central axis of the packaging disc (5) and the sealing panel (6).

10. The glass production system having one melting furnace and two production lines of claim 8, wherein a first end plate (74) is arranged at the first end of the receiving barrel (7), wherein the first end plate (74) is attached to an inner side wall of the packaging disk (5), wherein the charging port (71) is formed in the first end plate (74), wherein the inlet port (51) is arranged at an upper portion of the packaging disc (5), and wherein when the receiving barrel (7) revolves around the central axis of the packaging disc (5) and the sealing panel (6) to a zero o'clock position, the feeding port (71) is paired with the inlet port (51).

**11.** The glass production system having one melting furnace and two production lines of claim 8, wherein a second end plate (75) is arranged on the second end of the receiving barrel (7), wherein the second end plate (75) is attached to the inner side wall of the sealing panel (6), wherein the discharging port (72) is formed in the second end plate (75), wherein the outlet port (61) is provided at a lower portion of the sealing panel (6), and wherein when the receiving barrel (7) revolves to a six o'clock position around the central axis of the packaging disc (5) and the sealing panel (6), the discharging port (72) is paired with the outlet port (61).

**12.** The glass production system having one melting furnace and two production lines of claim 9, wherein the second end of the receiving barrel (7) is rotatably connected to the rotating disc (63), wherein the glass production system further comprises:

a driving shaft (52), wherein the driving shaft (52) is provided with a driving gear (53), wherein the receiving barrel (7) is provided with a driven gear ring (76), wherein the driving gear (53) is respectively or synchronously engaged with the driven gear rings (76) on the plurality of receiving barrels (7), and wherein the driving shaft (52) is connected to an external motor to respectively or synchronously propel the plurality of receiving barrels (7) to rotate on the rotating disc (63).

**13.** The glass production system having one melting furnace and two production lines of claim 8, wherein the negative pressure assembly comprises:

a pressure relief valve (64) and a vacuumizing device, wherein the pressure relief valve (64) is arranged on the sealing panel (6), wherein the pressure relief valve (64) is connected to the vacuumizing device through a pipeline, wherein the pressure relief port (73) is arranged in the second end plate (75) of the receiving barrel (7), and wherein when the receiving barrel (7) revolves to a three o'clock position and a nine o'clock position around the central axis of the packaging disc (5) and the rotating disc (63), the pressure relief port (73) is communicated with the pressure relief valve (64) in a paired manner.

**14.** The glass production system having one melting furnace and two production lines of claim 8, wherein a cross-shaped ratchet (65) and a dial disc (66) are arranged on the sealing panel (6), wherein a cross-shaped sliding groove (67) is formed in the cross-shaped ratchet (65), wherein a swing shaft (68) is arranged on the dial disc (66), wherein the cross-shaped ratchet (65) is connected to the rotating disc (63) through a connecting shaft, wherein the dial disc (66) is rotatably connected to the sealing panel (6) through the rotating shaft, and wherein the swing shaft (68) slidably penetrates through the plurality of cross-shaped sliding grooves (67), so that the dial disc (66) is in transmission connection with the cross-shaped ratchet (65).

FIG.1

FIG.2

FIG.3

FIG.4

FIG.5

FIG.6

Europäisches
Patentamt

European
Patent Office

Office européen
des brevets

# EUROPEAN SEARCH REPORT

**Application Number**

EP 25 18 5050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 947 298 A (BENXI YUJING GLASS CO LTD) 27 October 2023 (2023-10-27) | 1-7 | INV. C03B5/04 |
| A | * claims; figures * | 8-14 | C03B5/225 C03B7/02 |
| A | US 2019/284077 A1 (WANG ZHONGMING [US] ET AL) 19 September 2019 (2019-09-19) * claim 1; figure 1 * | 1-14 | C03B18/02 |

TECHNICAL FIELDS
SEARCHED        (IPC)

C03B

The present search report has been drawn up for all claims

| Place of search | Date of completion of the search | Examiner |
|---|---|---|
| The Hague | 20 November 2025 | Creux, Sophie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 5050

20-11-2025

| Patent document cited in search report | Publication date | Patent family member(s) | Publication date |
|---|---|---|---|
| CN 116947298 A | 27-10-2023 | NONE | |
| US 2019284077 A1 | 19-09-2019 | AU 2019234570 A1 | 22-10-2020 |
| | | BR 112020018763 A2 | 29-12-2020 |
| | | CA 3093926 A1 | 19-09-2019 |
| | | CL 2020002375 A1 | 15-01-2021 |
| | | CN 112135801 A | 25-12-2020 |
| | | CO 2020012679 A2 | 30-10-2020 |
| | | EC SP20065159 A | 30-11-2020 |
| | | EP 3765413 A1 | 20-01-2021 |
| | | ES 2921055 T3 | 17-08-2022 |
| | | MY 202707 A | 16-05-2024 |
| | | PE 20210381 A1 | 02-03-2021 |
| | | PL 3765413 T3 | 01-08-2022 |
| | | US 2019284077 A1 | 19-09-2019 |
| | | WO 2019178046 A1 | 19-09-2019 |

EPO FORM P0459